# EUROPEAN PATENT SPECIFICATION

(11) **EP 3 379 206 B1**
(45) Date of publication and mention of the grant of the patent: **15.07.2020**
(21) Application number: 16866062.9
(22) Date of filing: 11.10.2016
(51) Int. Cl.: G01D 11/24, G01P 1/02

(54) **ROTATION DETECTION DEVICE**
ROTATIONSERKENNUNGSVORRICHTUNG
DISPOSITIF DE DÉTECTION DE ROTATION

(30) Priority: 16.11.2015 JP 2015224066
(43) Date of publication of application: 26.09.2018
(73) Proprietor: Nippon Seiki Co., Ltd., Nagaoka-shi, Niigata 940-8580 (JP); Honda Motor Company Limited, Tokyo 107-8556 (JP)
(72) Inventor: YAMASHITA, Akihiko, Wako-shi Saitama 351-0193 (JP); KOSE, Tatsuya, Wako-shi Saitama 351-0193 (JP); SUYAMA, Yuki, Nagaoka-shi Niigata 940-8580 (JP); SATOU, Takahiro, Nagaoka-shi Niigata 940-8580 (JP)
(74) Representative: Strobel, Wolfgang
(86) International application number: PCT/JP2016/080115
(87) International publication number: WO 2017/086060

(56) References cited:
- EP-A1- 2 772 728
- WO-A1-97/04318
- WO-A1-97/04318
- JP-A- H0 634 391
- JP-A- H10 239 337
- JP-A- 2001 165 702
- JP-A- 2007 101 230
- KR-A- 20110 013 697
- US-A1- 2015 177 336

## Description

### TECHNICAL FIELD

The present invention relates to an improved rotation detection device.

### BACKGROUND ART

A rotation detection device is disposed, for example, in the vicinity of a wheel shaft of a front wheel of a bicycle. It is possible to measure a traveling speed of the bicycle from a rotation speed of the front wheel, which is detected by the rotation detection device. One of conventional technologies that are relevant to such rotation detection device is a technology disclosed in Patent Literature Document 1. Further known rotation detection devices are shown in WO97/04318 and EP2772728 A1.

The rotation detection device, such as the device disclosed in Patent Literature Document 1, has a cylindrical case, a magnetism detection element disposed at a bottom portion of the case, and a magnet disposed at the bottom portion of the case. Resin is loaded into the case such that the magnetism detection element and the magnet are embedded in the case.

Parts and components such as the magnetism detection element are fixed by the loaded resin in the case. It is possible to reduce the possibility that the parts and components such as the magnetism detection element are displaced in the case due to vibrations, and improve the detection accuracy.

However, such rotation detection device requires the curing of the loaded resin. Thus, the work time for manufacturing the rotation detection device becomes longer.

### LISTING OF REFERENCES

### PATENT LITERATURE DOCUMENTS

Patent Literature Document 1: Japanese Patent Application Laid-Open Publication No. 2008-164439

### SUMMARY OF THE INVENTION

### PROBLEMS TO BE SOLVED BY THE INVENTION

An object of the present invention is to provide a rotation detection device that can be manufactured in a short(er) period of time.

### SOLUTION TO OVERCOME THE PROBLEMS

According to the invention, there is provided a rotation detection device with the features of independent claim 1.

Preferably, the inner-case fitting portion has a cylindrical shape,
a sealing member is mounted on an outer periphery of the inner-case fitting portion, and
the sealing member is held between the first housing and the second housing.

Preferably, the first housing has a first-housing bottom plate and a first-housing peripheral wall that extends from an entire periphery of the first-housing bottom plate toward the second housing, and
the second housing is covered by the first-housing bottom plate and the first-housing peripheral wall.

Preferably, one of the first housing and the second housing is provided with an engagement claw, and the other of the first housing and the second housing is provided with an engagement hole that can engage with the engagement claw.

### ADVANTAGEOUS EFFECTS OF THE INVENTION

In the present invention, the inner case on which the magnetism detection element, the magnet, and the lead terminal are mounted is fitted in the inner-case fitting portion provided in the first housing or the second housing. Parts and components, such as the magnetism detection element, are fixed to the inner-case fitting portion with the inner case interposed therebetween. This configuration can suppress displacement that could be caused by vibrations. This configuration does not need the loading of resin to suppress displacement of parts and components, such as the magnetism detection element. Therefore, the time for curing the resin is unnecessary, and it is possible to provide the rotation detection device that can be manufactured in a shorter period of time.

In the present invention, the sealing member is mounted on the outer periphery of the cylindrical inner-case fitting portion, and the sealing member is held between the first housing and the second housing. Entry of water into the interior from the outside is suppressed at the outer periphery of the inner-case fitting portion, and the lifetime of the rotation detection device can be extended.

In the present invention, the second housing is covered by the first-housing bottom plate and the first-housing peripheral wall. When water present outside the rotation detection device is to enter the interior of the housing, the water needs to pass between the first-housing peripheral wall and the second housing and also between the first-housing bottom plate and the second housing. The presence of the first-housing peripheral wall increases the distance to reach the interior of the housing. This suppresses entry of water into the interior of the housing and can extend the lifetime of the rotation detection device.

In the present invention, one of the first housing and the second housing is provided with the engagement claw, and the other of the first housing and the second housing is provided with the engagement hole that can engage with the engagement claw. This simplifies the mounting of the second housing onto the first housing and can further reduce the time for manufacturing the rotation detection device. In addition, this configuration can facilitate the removal of the second housing from the first housing. Thus, the rotation detection device with high maintainability can be provided.

### BRIEF DESCRIPTION OF THE DRAWINGS

Fig. 1 is a perspective view of a rotation detection device according to an embodiment of the present invention.
Fig. 2 is an exploded perspective view of the rotation detection device illustrated in Fig. 1.
Fig. 3 is an exploded cross-sectional view of the rotation detection device illustrated in Fig. 2.
Fig. 4 is a cross-sectional view taken along the line 4-4 in Fig. 1.
Fig. 5 is a set of diagrams as viewed in the directions of the arrows 5a and 5b in Fig. 2.
Fig. 6 is a cross-sectional view taken along the line 6-6 in Fig. 4.
Fig. 7 is a set of views useful to describe a modified example of an inner-case fitting portion illustrated in Fig. 6.

### MODE FOR CARRYING OUT THE INVENTION

Hereinafter, embodiments of the present invention will be described with reference to the accompanying drawings. In the descriptions, the terms "right" and "left" indicate the right and the left in the drawings, and the terms "up" and "down" indicates the up side and the down side in the drawings.

### Embodiments

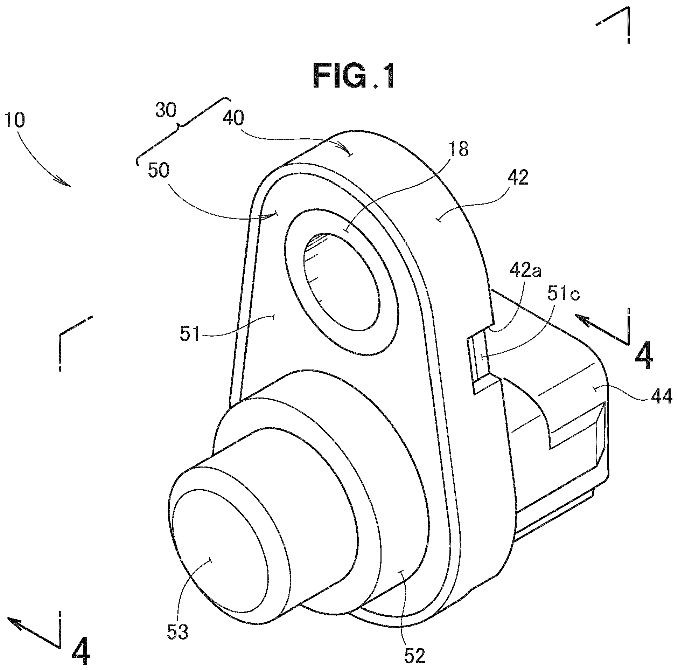

Referring to Fig. 1, a rotation detection device 10 is provided, for example, in the vicinity of a wheel shaft (axle) of a front wheel of a two-wheeled vehicle or bicycle. The travelling speed of the two-wheeled vehicle can be measured on the basis of a rotation speed of the front wheel detected by the rotation detection device 10. A portion depicted at the upper center in Fig. 1 is attached to a vehicle body, and a portion depicted to the right in Fig. 1 is connected to an external connector. A portion depicted to the left in Fig. 1 is disposed to oppose the wheel shaft.

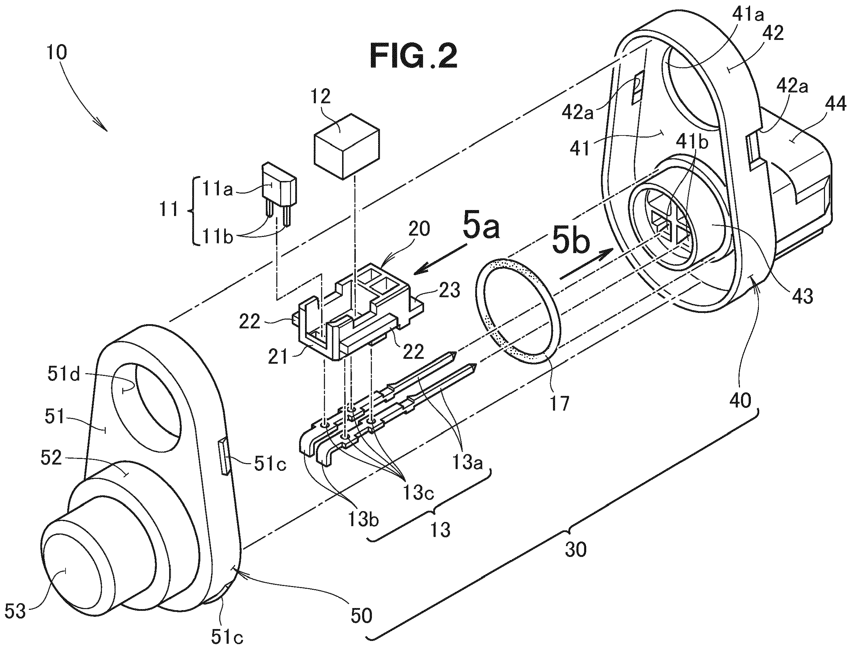

Referring to Fig. 2, the rotation detection device 10 includes a magnetism detection element 11 that detects a change in magnetism, a magnet 12 that applies (imparts) a magnetic field to the magnetism detection element 11, and lead terminals 13 connected to the magnetism detection element 11. The magnetism detection element 11, the magnet 12, and the lead terminals 13 are mounted on an inner case 20, which is then housed in a housing 30. The housing 30 has a sealing member 17 for suppressing entry of water into the interior of the housing 30.

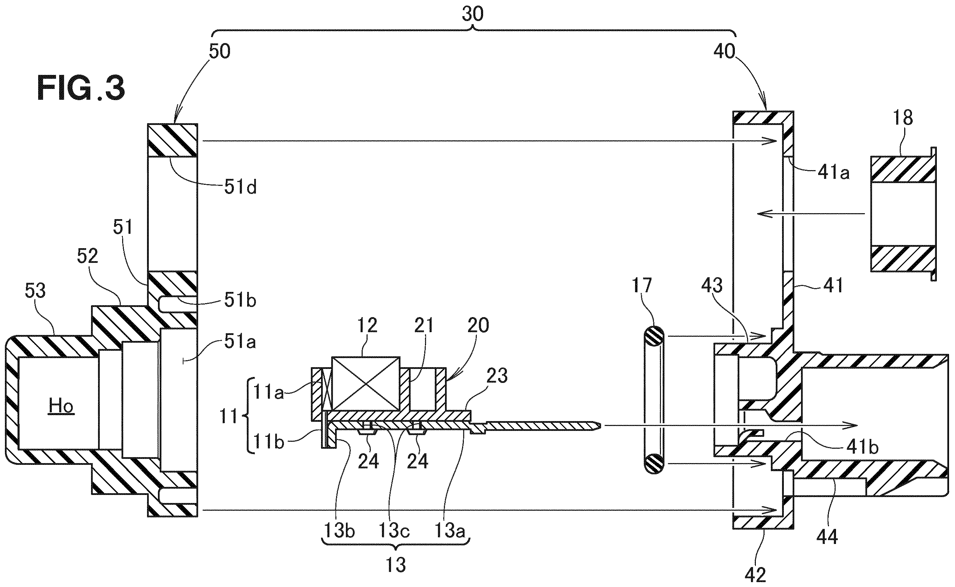

Referring to Fig. 3, a cylindrical collar 18 is mounted to the housing 30. When the rotation detection device 10 is mounted to a vehicle body or the like, a bolt is inserted into the collar 18.

The housing 30 includes a first housing 40 and a second housing 50 fitted into the first housing 40 and disposed to oppose a rotating body. The first housing 40 and the second housing 50 are each a resin molded product. Any desired resin, such as polybutylene terephthalate resin, can be used as a material for the first housing 40 and the second housing 50.

Referring to Fig. 2, the magnetism detection element 11 has a detection element main body 11a disposed adjacent to the magnet 12 and element-side contacts 11b and 11b that extend downward from a lower portion of the detection element main body 11a and are in contact with the lead terminals 13 and 13. The element-side contacts 11b and 11b are formed at two positions to match the number of the lead terminals 13 and 13.

Referring also to Fig. 3, the lead terminals 13 and 13 each have a generally L shape. The lead terminals 13 and 13 have terminal main bodies 13a and 13a that extend along a lower surface of the inner case 20 and terminal-side contacts 13b and 13b that extend downward from one ends of the respective terminal main bodies 13a and 13a and are in contact with the element-side contacts 11b and 11b. Two terminal holes 13c for fixing the lead terminals 13 and 13 to the inner case 20 are formed in each of the terminal main bodies 13a and 13a.

The inner case 20 includes a case main body 21 that houses the magnetism detection element 11 and the magnet 12, case ribs 22 and 22 formed on the right and left sides of the case main body 21 to reinforce the case main body 21, a case abutment portion 23 that extends from a leading end of the case main body 21 toward the first housing 40 and has a leading end that abuts the first housing 40, and case pins 24 and 24 that extend downward from a lower surface of the case main body 21 and are inserted in the terminal holes 13c. The case pins 24 and 24 are formed integrally with the case main body 21.

Any desired resin, such as polybutylene terephthalate resin, can be used as a material for the inner case 20.

The first housing 40 includes a first-housing bottom plate 41, a first-housing peripheral wall 42 that extends from an entire periphery of the first-housing bottom plate 41 toward the second housing 50, an inner-case fitting portion 43 that extends from the first-housing bottom plate 41 toward the second housing 50 in an area surrounded by the first-housing peripheral wall 42, and a connection portion 44 that is formed on the first-housing bottom plate 41 and can be connected to an external connector.

The second housing 50 includes a second-housing base 51 covered by the first-housing bottom plate 41 and the first-housing peripheral wall 42, a cylindrical second-housing intermediate portion 52 formed integrally with the second-housing base 51, and a cylindrical rotating-body opposing portion 53 that is formed integrally with the second-housing intermediate portion 52 and has a closed bottom.

Formed in the first-housing bottom plate 41 are a first collar insertion hole 41a in which the collar 18 is inserted and terminal insertion holes 41b that provide communication between the inner-case fitting portion 43 and the connection portion 44 and in which the lead terminals 13 are inserted.

Engagement holes 42a that engage with the second housing 50 are formed at four positions in the first-housing peripheral wall 42.

The inner-case fitting portion 43 is in connection with the connection portion 44 with the first-housing bottom plate 41 interposed therebetween. In other words, the inner-case fitting portion 43 and the connection portion 44 are provided on the first-housing bottom plate 41 at the same location. The inner-case fitting portion 43 extends from the first-housing bottom plate 41 toward the second housing 50, and the connection portion 44 extends from the first-housing bottom plate 41, serving as a starting point, away from the second housing 50.

A housing hole Ho for housing the inner case 20 is formed continuously in the second-housing base 51, the second-housing intermediate portion 52, and the rotating-body opposing portion 53. The outer wall of the housing hole Ho can be regarded as a peripheral wall that surrounds the inner case 20.

Of the peripheral wall, the portion formed in the second-housing base 51 can be regarded as a base peripheral wall 51a. The base peripheral wall 51a is formed in a circular shape along the outer surface of the cylindrical inner-case fitting portion 43. A groove 51b that surrounds the base peripheral wall 51a is formed in the second-housing base 51. The groove 51b is formed to oppose the first housing 40 (first-housing bottom plate 41).

Engagement claws 51c that engage with the engagement holes 42a in the first housing 40 and second collar insertion hole 51d in which the collar 18 is inserted are formed in the second-housing base 51.

An O-ring made of acrylic rubber or silicone rubber can be employed as the sealing member 17.

It should be noted that the inner-case fitting portion 43 may be formed in the second housing 50. Also, the inner-case fitting portion 43 may be formed in both the first housing 40 and the second housing 50.

The engagement claws 51c may be provided on the first housing 40. In this configuration, the engagement holes 42a are provided in the second housing 50.

An example of a method of assembling the rotation detection device will be described. Firstly, the magnetism detection element 11 and the magnet 12 are housed into the inner-case main body 21, and the lead terminals 13 are fixed to the lower surface of the inner-case main body 21. The case pins 24 are inserted into the terminal holes 13c, and the lead terminals 13 are then fused and attached to the inner-case main body 21.

Subsequently, the sealing member 17 is mounted to the outer periphery of the inner-case fitting portion 43.

Then, the magnetism detection element 11, the magnet 12, and the lead terminals 13 are mounted onto the inner case 20, and this assembly is press-fitted into the inner-case fitting portion 43. As the assembly is fitted into the inner-case fitting portion 43, the leading ends of the lead terminals 13 face the interior of the connection portion 44.

Subsequently, the engagement claws 51c are pushed into the engagement holes 42a to mount the second housing 50 into the first housing 40.

Lastly, the collar 18 is inserted into the first and second collar insertion holes 41a and 51d.

It should be noted that the sealing member 17 and the collar 18 can be mounted at desired timings.

The above-described rotation detection device according to the embodiment of the present invention provides the following advantageous effects.

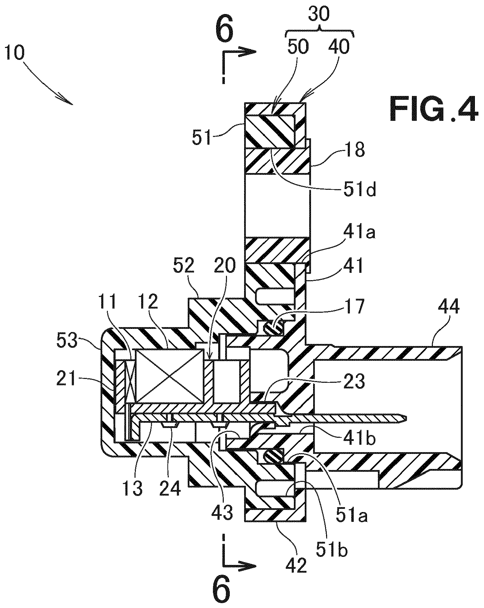

Referring to Fig. 4, the inner case 20 on which the magnetism detection element 11, the magnet 12, and the lead terminals 13 are mounted is fitted in the inner-case fitting portion 43 provided in the first housing 40. Parts and components, such as the magnetism detection element 11, are fixed to the inner-case fitting portion 43 with the inner case 20 interposed therebetween. This configuration can suppress displacement that could be caused by vibrations. This configuration can render resin loading unnecessary to suppress displacement of parts and components, such as the magnetism detection element 11. Therefore, the time for curing resin becomes unnecessary, and it is possible to provide the rotation detection device 10 that can be manufactured in a shorter period of time.

The sealing member 17 is mounted on the outer periphery of the cylinder inner-case fitting portion 43, and the sealing member 17 is held between the first housing 40 and the second housing 50. Entry of water into the interior from the outside is suppressed at the outer periphery of the inner-case fitting portion 43, and the lifetime of the rotation detection device 10 can be extended.

The second housing 50 is covered by the first-housing bottom plate 41 and the first-housing peripheral wall 42. When water present outside the rotation detection device 10 is to enter the interior of the housing 30, the water needs to pass between the first-housing peripheral wall 42 and the second housing 50 and also between the first-housing bottom plate 41 and the second housing 50. The presence of the first-housing peripheral wall 42 increases the distance to reach the interior of the housing 30. This suppresses entry of water into the interior of the housing 30 and can extend the lifetime of the rotation detection device 10.

The base peripheral wall 51a is formed in the second housing 50 along the outer periphery of the inner-case fitting portion 43, and the groove 51b is formed to surround the base peripheral wall 51a. The base peripheral wall 51a and the inner-case fitting portion 43 hold the sealing member 17 therebetween. The groove 51b is formed around the sealing member 17. The groove 51b can suppress entry of water into the interior of the housing 30. Therefore, it is possible to suppress entry of water into the interior of the housing 30 and extend the lifetime of the rotation detection device 10.

Referring to Fig. 2, the engagement claws 51c are provided on the second housing 50, and the engagement holes 42a that can engage with the engagement claws 51c are provided in the first housing 40. This simplifies the mounting of the second housing 50 onto the first housing 40 and can further reduce the time for manufacturing the rotation detection device 10.

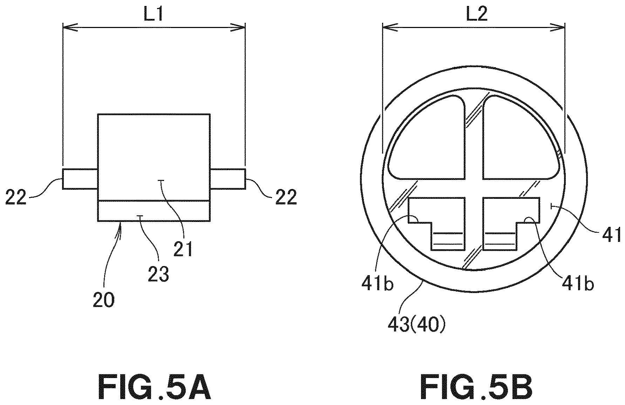

Referring to Fig. 5(a), the inner case 20 includes the case main body 21 on which the magnetism detection element 11 is mounted and the case ribs 22 and 22 that are formed integrally with the case main body 21 to reinforce the case main body 21. The inner case 20 has a width L1.

Referring to Fig. 5(b), the inner-case fitting portion 43 has a cylindrical shape. The inner-case fitting portion 43 has an inner diameter L2.

Referring also to Fig. 5(a), the width L1 of the inner case 20 is approximately equal to the inner diameter L2 of the inner-case fitting portion 43, and the inner diameter L2 of the inner-case fitting portion 43 is slightly larger than the width L1 of the inner case 20. Therefore, the case ribs 22 and 22 make contact with the inner peripheral surface of the inner-case fitting portion 43.

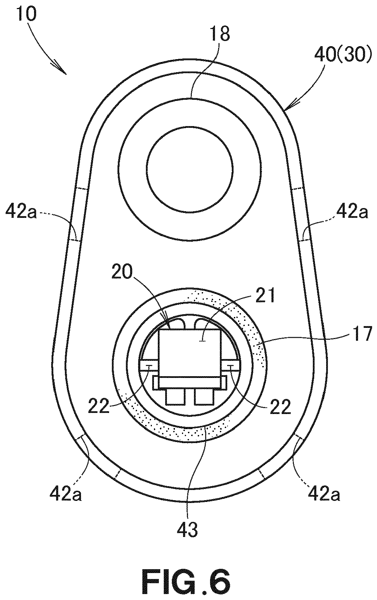

Referring to Fig. 6, the case ribs 22 and 22 abut the inner peripheral surface of the inner-case fitting portion 43. As the case ribs 22 and 22 abut the inner-case fitting portion 43, displacement of the inner case 20 inside the housing 30 is suppressed. Displacement of the inner case 20 is suppressed by the case ribs 22 and 22 provided to reinforce the case main body 21. Displacement of the inner case 20 can be suppressed with a small number of components and with a simple configuration, which is desirable.

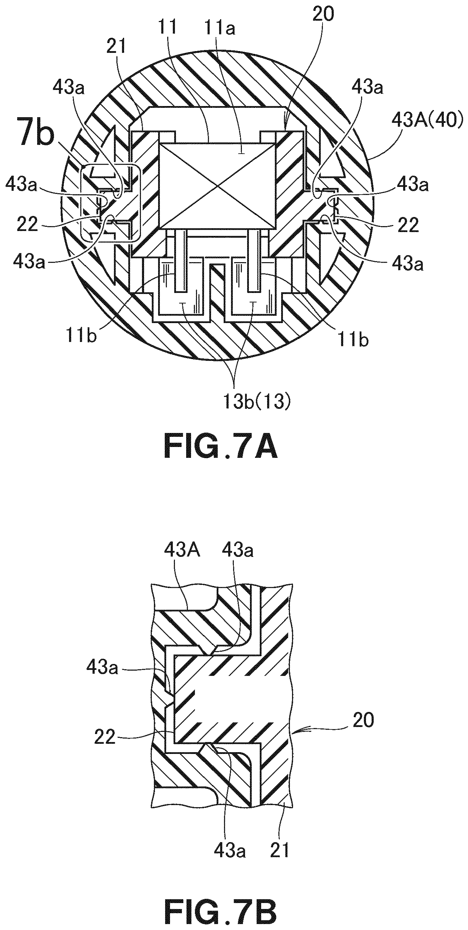

Referring to Figs. 7(a) and 7(b), these drawings illustrate a modified example of the inner-case fitting portion shown in Fig. 6. The case ribs 22 and 22 are formed integrally with the case main body 21 at the right and left sides thereof and each have a rectangular parallelepiped shape. An inner-case fitting portion 43A includes protrusions 43a that protrude toward the case ribs 22 and 22 and have respective leading ends that abut the case ribs 22 and 22. The protrusions 43a each abut a corresponding one of an upper surface, a lower surface, and an outer side surface of the right and left case ribs 22 and 22. As the protrusions 43a abut the case ribs 22 and 22 at many positions, displacement of the inner case 20 can be suppressed more reliably.

The protrusions 43a each have a generally V shape (generally triangular shape) in a state in which the inner case 20 is not yet fitted in the inner-case fitting portion 43A. The strength of the protrusion 43a is lower than the strength of the case ribs 22 and 22. Thus, when the inner case 20 is fitted into the inner-case fitting portion 43A, the leading ends of the protrusions 43a are deformed by the case ribs 22 and 22. In other words, the protrusions 43a abut the case ribs 22 and 22 in an elastically deformed state. This ensures that the protrusions 43a abut the case ribs 22 and 22. This configuration also makes it possible to absorb dimension errors produced inevitably among different products.

Although the rotation detection device according to the embodiment of the present invention has been described with an example in which the rotation detection device is used on a front wheel of a two-wheeled vehicle, the rotation detection device may be used on a rear wheel, and the present invention is not limited to such embodiments. In other words, the present invention is not limited to the embodiments as long as the functions and the advantageous effects of the present invention are obtained.

### INDUSTRIAL APPLICABILITY

The rotation detection device of the present invention is advantageous to detect a travelling speed of a two-wheeled vehicle.

### REFERENCE NUMERALS

10 Rotation detection device
11 Magnetism detection element
12 Magnet
13 Lead terminal
17 Sealing member
20 Inner case
30 Housing
40 First housing
41 Fist-housing bottom plate
42 First-housing peripheral wall
42a Engagement holes
43 Inner-case fitting portion
44 Connection portion
50 Second housing
51c Engagement claws

## Claims

1. A rotation detection device (10) comprising a magnetism detection element (11) that detects a change in magnetism produced as a rotating body rotates, a magnet (12) that applies a magnetic field to the magnetism detection element (11), two lead terminals (13) connected to the magnetism detection element (11), and a housing (30) that houses the magnetism detection element (11), the magnet (12), and the lead terminals (13),
the magnetism detection element (11), the magnet (12), and the lead terminals (13) being mounted on an inner case (20),
the housing (30) including a first housing (40) having a connection portion (44) with an interior space wherein leading ends of the lead terminals are located in the interior space, and the leading ends are configured to be electrically connected to an external connector and wherein the connection portion is configured to be connected to the external connector,
and a second housing (50) fitted in the first housing (40) and disposed to face the rotating body, and
the first housing (40) or the second housing (50) being provided with an inner-case fitting portion (43) into which the inner case (20) is fitted,
**characterized in that**
the magnetism detection element (11) comprises a detection element main body (11a) disposed adjacent to the magnet (12) and two element-side contacts (11b, 11b) that extend downward from a lower portion of the detection element main body (11a), and
the element-side contacts (11b, 11b) of the magnetism detection element (11) are in contact with the lead terminals (13).

2. The rotation detection device (10) according to claim 1, wherein the inner-case fitting portion (43) has a cylindrical shape,
a sealing member (17) is mounted on an outer periphery of the inner-case fitting portion (43), and
the sealing member (17) is held between the first housing (40) and the second housing (50).

3. The rotation detection device (10) according to claim 1 or 2, wherein the first housing (40) has a first-housing bottom plate (41) and a first-housing peripheral wall (42) that extends from an entire periphery of the first-housing bottom plate (41) toward the second housing (50), and
the second housing (50) is covered by the first-housing bottom plate (41) and the first-housing peripheral wall (42).

4. The rotation detection device (10) according to claim 1 or 2, wherein one of the first housing (40) and the second housing (50) is provided with an engagement claw (51c), and the other of the first housing (40) and the second housing (50) is provided with an engagement hole (42a) that can engage with the engagement claw (51c).

## Patentansprüche

1. Rotationserfassungsvorrichtung (10) mit einem Magnetismus-Erfassungselement (11), das eine Änderung des Magnetismus erfasst, die erzeugt wird, wenn sich ein rotierender Körper dreht, einem Magneten (12), der ein Magnetfeld an das Magnetismus-Erfassungselement (11) anlegt, zwei Leitungsanschlüssen (13), die mit dem Magnetismus-Erfassungselement (11) verbunden sind, und einem Gehäuse (30), das das Magnetismus-Erfassungselement (11), den Magnet (12) und die Leitungsanschlüsse (13) aufnimmt,
wobei das Magnetismus-Erfassungselement (11), der Magnet (12) und die Leitungsanschlüsse (13) an einem Innengehäuse (20) montiert sind,
wobei das Gehäuse (30) ein erstes Gehäuse (40), das einen Verbindungsabschnitt (44) mit einem Innenraum aufweist, wobei vordere Enden der Leitungsanschlüsse in dem Innenraum angeordnet sind und die vorderen Enden dazu eingerichtet sind, elektrisch mit einem externen Anschluss verbunden zu werden, und wobei der Verbindungsabschnitt dazu eingerichtet ist, mit dem externen Anschluss verbunden zu werden, und ein zweites Gehäuse (50) umfasst, das in das erste Gehäuse (40) eingesetzt und derart angeordnet ist, dass es dem rotierenden Körper zugewandt ist, und
wobei das erste Gehäuse (40) oder das zweite Gehäuse (50) mit einem Innengehäuse-Einsetzabschnitt (43) versehen ist, in das das Innengehäuse (20) eingesetzt ist,
**dadurch gekennzeichnet, dass**
das Magnetismus-Erfassungselement (11) einen Erfassungselement-Hauptkörper (11a), der benachbart zu dem Magneten (12) angeordnet ist, und zwei elementseitige Kontakte (11b, 11b) aufweist, die sich von einem unteren Abschnitt des Erfassungselement-Hauptkörpers (11a) nach unten erstrecken, und
die elementseitigen Kontakte (11b, 11b) des Magnetismus-Erkennungselements (11) mit den Leitungsanschlüssen (13) in Kontakt stehen.

2. Rotationserfassungsvorrichtung (10) nach Anspruch 1, wobei der Innengehäuse-Einsetzabschnitt (43) eine zylindrische Form hat,
ein Dichtelement (17) an einem äußeren Umfang des Innengehäuse-Einsetzabschnitt (43) angebracht ist, und
das Dichtelement (17) zwischen dem ersten Gehäuse (40) und dem zweiten Gehäuse (50) aufgenommen ist.

3. Rotationserfassungsvorrichtung (10) nach Anspruch 1 oder 2, wobei das erste Gehäuse (40) eine Bodenplatte (41) des ersten Gehäuses und eine Umfangswand (42) des ersten Gehäuses aufweist, die sich von einem gesamten Umfang der Bodenplatte (41) des ersten Gehäuses in Richtung des zweiten Gehäuses (50) erstreckt, und
das zweite Gehäuse (50) durch die Bodenplatte (41) des ersten Gehäuses und die Umfangswand (42) des ersten Gehäuses bedeckt ist.

4. Rotationserfassungsvorrichtung (10) nach Anspruch 1 oder 2, wobei eines aus erstem Gehäuse (40) und zweitem Gehäuse (50) mit einer Eingriffskralle (51c) versehen ist und das andere aus erstem Gehäuse (40) und zweitem Gehäuse (50) mit einer Eingriffsöffnung (42a) versehen ist, die mit der Eingriffskralle (51c) eingreifen kann.

## Revendications

1. Dispositif (10) de détection de rotation comprenant un élément de détection de magnétisme (11) qui détecte une variation dans un magnétisme produit lorsqu'un corps rotatif tourne, un aimant (12) qui applique un champ magnétique à l'élément de détection de magnétisme (11), deux bornes de connexion (13) connectées à l'élément de détection de magnétisme (11), et un boîtier (30) qui sert à loger l'élément de détection de magnétisme (11), l'aimant (12) et les bornes de connexion (13),
l'élément de détection de magnétisme (11), l'aimant (12) et les bornes de connexion (13) étant montés sur une cartouche intérieure (20),
le boîtier (30) comprenant un premier boîtier (40) présentant une partie de connexion (44) offrant un espace intérieur dans lequel des extrémités de connexion des bornes de connexion sont logées dans l'espace intérieur et les extrémités de connexion sont configurées pour être connectées électriquement à un connecteur extérieur, la partie de connexion étant configurée pour être connectée au connecteur extérieur,
et un second boîtier (50) emboîté dans le premier boîtier (40) et disposé de façon à faire face au corps rotatif, et
le premier boîtier (40) ou le second boîtier (50) étant pourvu d'une partie (43) d'emboîtement de cartouche intérieure dans laquelle la cartouche intérieure (20) est emboîtée,
**caractérisé en ce que**
l'élément de détection de magnétisme (11) comprend un corps principal d'élément de détection (11a) disposé de manière adjacente à l'aimant (12) et deux contacts latéraux d'élément (11b, 11b) qui s'étendent vers le bas à partir d'une partie inférieure du corps principal d'élément de détection (11a), et
les contacts latéraux d'élément (11b, 11b) de l'élément de détection de magnétisme (11) sont en contact avec les bornes de connexion (13).

2. Dispositif (10) de détection de rotation suivant la revendication 1, dans lequel la partie (43) d'emboîtement de cartouche intérieure a une forme cylindrique,
un élément d'étanchéité (17) est monté sur une partie périphérique extérieure de la partie (43) d'emboîtement de cartouche intérieure, et
l'élément d'étanchéité (17) est maintenu entre le premier boîtier (40) et le second boîtier (50).

3. Dispositif (10) de détection de rotation suivant la revendication 1 ou 2, dans lequel le premier boîtier (40) présente une plaque de fond de premier boîtier (41) et une paroi périphérique de premier boîtier (42) qui s'étend à partir d'une partie périphérique entière de la plaque de fond de premier boîtier (41) en direction du second boîtier (50), et
le second boîtier (50) est recouvert par la plaque de fond de premier boîtier (41) et la paroi périphérique de premier boîtier (42).

4. Dispositif (10) de détection de rotation suivant la revendication 1 ou 2, dans lequel l'un parmi le premier boîtier (40) et le second boîtier (50) est pourvu d'une saillie de venue en prise (51c), et l'autre parmi le premier boîtier (40) et le second boîtier (50) est pourvu d'un trou de venue en prise (42a) qui peut venir en prise avec la saillie de venue en prise (51c).
